# EUROPÄISCHE PATENTSCHRIFT

(11) **EP 2 404 963 B1**
(45) Veröffentlichungstag und Bekanntmachung des Hinweises auf die Patenterteilung: **10.12.2014**
(21) Anmeldenummer: 10168646.7
(22) Anmeldetag: 07.07.2010
(51) Int. Cl.: C08L 7/00, C08L 9/00, C08K 3/04, C08K 3/36, C08K 5/01

(54) **Kautschukmischung**
Rubber composition
Composition de caoutchouc

(43) Veröffentlichungstag der Anmeldung: 11.01.2012
(73) Patentinhaber: Continental Reifen Deutschland GmbH, 30165 Hannover (DE)
(72) Erfinder: Weber, Christian, 30826, Garbsen (DE)
(74) Vertreter: Finger, Karsten

(56) Entgegenhaltungen:
- EP-A1- 2 090 615
- EP-A2- 1 876 203
- EP-A2- 2 022 823
- WO-A1-2009/115383
- US-B1- 6 310 144

## Beschreibung

Die Erfindung betrifft eine Kautschukmischung, insbesondere für Fahrzeugluftreifen, Gurte, Riemen und Schläuche.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.
Zur Verbesserung der Fahreigenschaften wird beispielsweise der Laufstreifen eines Fahrzeugluftreifens oft in zwei Teile geteilt, nämlich zum Einen in das Laufstreifenoberteil, welches im direkten Kontakt zur Fahrbahn steht und als Cap bezeichnet wird und zum Anderen in das darunter liegende Laufstreifenunterteil, welches auch als Base bezeichnet wird.
Die Base hat dabei mehrere Aufgaben zu erfüllen. Durch den Einsatz einer Base soll der Rollwiderstand des Reifens reduziert werden, so dass die eingesetzte Mischung eine geringe Hysterese besitzen muss. Gleichzeitig muss die Kautschukmischung der Base eine ausreichend hohe Klebrigkeit während des Reifenherstellungsprozesses aufweisen, damit der Laufstreifen am Reifenunterbau haften bleibt. In vielen Kautschukmischungen für die Cap wird aus verschiedenen Gründen eine relativ hohe Menge an Kieselsäure eingesetzt, was wiederum dazu führt, dass das Laufstreifenoberteil keine oder nur eine sehr geringe elektrische Leitfähigkeit besitzt. Hierbei muss die elektrische Leitfähigkeit des Laufstreifens durch die Verwendung eines "Carbon Center Beams" , d.h. ein die Cap durchdringender leitfähiger Pfad aus einer elektrisch leitfähigen Gummimischung, die Ruß enthält, gewährleistet werden, was einen zusätzlichen Herstellungsaufwand bedeuten kann, wenn die Base-Mischung keine ausreichende elektrische Leitfähigkeit besitzt. In diesem Fall muss eine weitere zusätzliche Kautschukmischung verwendet werden. Neben all diesen Anforderungen muss ebenso die strukturelle Haltbarkeit gewährleistet sein. Aus ökologischen Gründen steht derzeit der geringe Rollwiderstand eines Fahrzeugluftreifens im Vordergrund, so dass die so genannten Handling-Eigenschaften lediglich eine untergeordnete Rolle spielen, sofern sie nicht die Sicherheit beim Fahren gefährden. Aus diesem Grund werden aktuell Kautschukmischungen für die Base verwendet, die eine geringe Steifigkeit besitzen.
Es ist bekannt, dass die oben genannten Anforderungen, wie geringe Hysterese, ausreichende Klebrigkeit, elektrische Leitfähigkeit und strukturelle Haltbarkeit, in einem Konflikt zueinander stehen und meist ein nur unbefriedigender Kompromiss gefunden werden kann, d.h. verbessert sich die eine Anforderung, so verschlechtert sich mindestens eine weitere Anforderung. So verlangt beispielsweise die Anforderung "geringe Hysterese" eine Kautschukmischung mit geringem Füll- und hohem Vernetzungsgrad, was allerdings zu einer schlechten elektrischen Leitfähigkeit und einer geringen strukturellen Haltbarkeit führt.
Ebenso besteht ein Zielkonflikt zwischen der Rissbeständigkeit (strukturelle Haltbarkeit) und der Hysterese (Rollwiderstand). Gleichzeitig muss die elektrische Leitfähigkeit ausreichend hoch sein, so dass der Gesamtreifen bestimmte Grenzwerte einhält.

Derartige Anforderungen sind auch bei technischen Gummiartikeln, wie Gurte und Riemen, zu finden.

Aus der EP 1 589 068 A1 sind Kautschukmischungen für die Laufstreifenbase bekannt, welche eine Kombination von 5 bis 50 phr Butadienkautschuk und 50 bis 95 phr Polyisopren als Kautschukkomponente enthalten. Die Kautschukmischung enthält als einzige Füllstoffkomponente einen Aktivruß, vorzugsweise in Mengen von 55 bis 75 phr. Die Kautschukmischung hat eine hohe Flexibilität bei gleichzeitig hoher Steifigkeit, um dadurch die Handlingeigenschaften zu verbessern.

Zur Verbesserung des Chipping- und Chunking-Verhaltens eines Laufstreifens eines Fahrzeugluftreifens enthält die in EP 1 808 456 A1 beschriebene Kautschukmischung 5 bis 80 phr eines Mineralölweichmachers und 5 bis 30 phr eines Harzes mit einem bestimmten Molekulargewicht und Erweichungspunkt, ebenso noch 5 bis 100 phr eines bestimmten Rußes. Eine Kautschukkomponente, welche in hohen Mengen verwendet wird, ist hierbei Styrolbutadienkautschuk.

In WO 2009/115383 A1 wird eine Kautschukmischung, insbesondere für die Base eines Laufstreifens beschrieben, welche sich durch verbesserten Wärmeaufbau und verbessertes Abriebsverhalten auszeichnet. Die dort beschriebenen Kautschukmischungen enthalten lediglich 20 bis 40 phr eines Rußes.

Die EP 2022823 A2 offenbart eine Kautschukmischung für die Seitenwand von Fahrzeugluftreifen, die Sorbitanmonostearat, 40 phr Naturkautschuk (NR), 60 phr Polybutadien-Kautschuk (BR), 51 phr des Rußes N 550, Prozessöl, optional Kieselsäure sowie 2 bis 4 phr eines Phenolharzes enthält. Die Kautschukmischung soll eine bessere Klebrigkeit bei der Herstellung des Reifens aufweisen als eine Kautschukmischung mit Sorbitanmonostearat, die kein zusätzliches Klebharz enthält und bei der Produktion Feuchtigkeit ausgesetzt ist.

Aus der EP 1876203 A2 ist eine Kautschukmischung zur Gummierung von vorbehandelten Festigkeitsträgern bekannt die ein natürliches und/oder synthetisches Polyisopren und wenigstens zwei weitere synthetische Kautschuke sowie ein Verstärkerharz (Kresolharz oder ein Resorcin-Kondensat oder ein modifiziertes Resorcin-Kondensat) enthält. Bei der Anwendung als Gummierungsmischung von Festigkeitsträgern im Fahrzeugreifen zeigen sich eine verbesserte Haftung an den textilen Festigkeitsträger, eine verbesserte Haltbarkeit bei Schwerlast und ein verbessertes Rollwiderstandsverhalten.

Die EP 2090615 A1 offenbart eine Kautschukmischung für den Laufstreifen von Fahrzeugluftreifen, die eine Kombination aus Kieselsäure als verstärkenden Füllstoff und wenigstens einer teilweise decarboxylierten Harzsäure als Prozessöl anstelle eines Petroleum-basierten Öls enthält. Eine derartige Kautschukmischun zeigt u.a. eine verbesserte Abriebresistenz und eine höhere Reißfestigkeit.

Die US 6213144 B1 offenbart ein Verfahren, bei dem eine Kautschukmischung mit verbesserter thennischer Stabilität, die ein 2,2,4-Trimethyl-1,2-Dihydroquinolin-Polymer enthält, an einen textilen Festigkeitsträger vulkanisiert wird. Der textile Festigkeitsträger wird zuvor mit einem Haftvermittler vorbehandelt, der resorcinhaltige Verbindungen beinhaltet, und anschließend mit der Kautschukmischung gummiert.

Der Erfindung liegt daher die Aufgabe zu Grunde, eine Kautschukmischung, insbesondere für Fahrzeugluftreifen mit Cap/Base-Aufbau des Laufstreifens, bereitzustellen, die die Konflikte zwischen geringer Hysterese, ausreichender Klebrigkeit, elektrischer Leitfähigkeit und struktureller Haltbarkeit auf einem höheren Niveau lösen kann und dadurch den Einsatz von Kautschukmischungen mit niedrigerer Hysterese, insbesondere für die Base eines Fahrzeugluftreifens, ermöglicht ohne dass der Herstellprozess des Reifens oder die weiteren Reifeneigenschaften negativ beeinflusst werden.

Gelöst wird diese Aufgabe durch eine Kautschukmischung mit folgender Zusammensetzung:
- 95 bis 100 phr zumindest eines natürlichen oder synthetischen Polyisoprens und
- 41 bis 50 phr zumindest eines Rußes und
- 3 bis 15 phr zumindest eines Weichmacheröls und
- 3 bis 15 phr zumindest einer Kieselsäure und
- 1 bis 7 phr zumindest eines Klebharzes und
- weitere Zusatzstoffe
wobei der Ruß eine Iod-Absorptionszahl gemäß ASTM D 1510 von 60 bis 300 g-/kg und eine DPB-Zahl gemäß ASTM D 2414 von 80 bis 200 cm³/100 g hat.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von einem vergleichsweise hohen Gewichtsanteil an natürlichem und / oder synthetischem Polyisopren und 41 bis 50 phr eines Rußes mit einer Iod-Absorotionszahl gemäß ASTM D 1510 von 60 bis 300 g/kg und einer DPB-Zahl gemäß ASTM D 2414 von 80 bis 200 cm3/100 g und einer relativ geringen Menge an Kieselsäure, Kautschukmischungen mit niedrigerer Hysterese, insbesondere für die Base eines Fahrzeugluftreifens ermöglicht werden, ohne dass der Herstellprozess des Reifens oder die weiteren Reifeneigenschaften negativ beeinflusst werden. Weiterhin zeigen sich überraschend eine gute Klebrigkeit und eine gute elektrische Leitfähigkeit. Dies gilt nicht nur für den Fahrzeuglaufstreifen, insbesondere für die Base, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.
Der Begriff Body-Mischung beinhaltet im Wesentlichen Seitenwand, Innenseele, Apex, Gürtel, Schulter, Gürtelprofil, Squeege, Karkasse, Wulstverstärker, weitere Verstärkungseinlagen und / oder Bandage.

Weitere Anwendung findet die erfindungsgemäße Kautschukmischung in der Mischungsentwicklung für Riemen, Gurte und Schläuchen, da auch hier Anforderungen hinsichtlich geringer Hysterese, ausreichender Klebrigkeit, elektrischer Leitfähigkeit und struktureller Haltbarkeit gestellt werden.

Die Kautschukmischung enthält 95 bis 100 phr, bevorzugt 98 bis 100 phr, zumindest eines natürlichen oder synthetischen Polyisoprens und 0 bis 5 phr, bevorzugt 0 bis 2 phr, eines weiteren polaren oder unpolaren Kautschuks.

Der polare oder unpolare Kautschuk ist dabei ausgewählt aus der Gruppe, bestehend aus Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Insbesondere Styrol-Isopren-Butadien-Terpolymer, Butylkautschuk, Halobutylkautschuk oder Ethylen-Propylen-Dien-Kautschuk kommen bei der Herstellung von technischen Gummiartikeln zum Einsatz.
Bevorzugt ist es, wenn es sich bei dem weiteren polaren oder unpolaren Kautschuk um zumindest einen Butadienkautschuk handelt.

Die erfindungsgemäße Kautschukmischung enthält 3 bis 15 phr, bevorzugt 3 bis 10 phr, besonders bevorzugt 3 bis 6 phr, Kieselsäure. Die gesamte Menge an Kieselsäure ist hierbei in einer besonders vorteilhaften Ausführungsform durch ein Kupplungsagens, bevorzugt Silan, an die Polymermatrix angebunden.
Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche zwischen 120 und 300 m²/g, bevorzugt zwischen 150 und 250 m²/g, und einer CTAB-Oberfläche zwischen 120 und 230 m²/g, bevorzugt zwischen 140 und 200 m²/g, eingesetzt.

Die Menge des vorteilhafterweise verwendeten Silans beträgt 0,1 bis 5 phr, bevorzugt 0, 1 bis 2 phr. Als Silan-Kupplungsagenzien können dabei alle dem Fachmann für die Verwendung in Kautschukmischungen bekannten Silan-Kupplungsagenzien verwendet werden. Es ist aber auch möglich, dass die Kieselsäure nicht angebunden wird, d.h. dass kein Kupplungsagens verwendet wird.

Die Verwendung von derart aktivierter Kieselsäure zeigt in den weiter unten aufgeführten Ausführungsbeispielen Vorteile hinsichtlich der Reißeigenschaften.

Insbesondere für die Verwendung der erfindungsgemäßen Kautschukmischung als Base des Laufstreifens eines Reifens ist eine ausreichende Klebrigkeit der unvulkanisierten Mischung unbedingt notwendig, damit der Laufstreifen während des Herstellprozesses haften bleibt. Dazu müssen in der Kautschukmischung wenigstens 1 bis 5 phr eines Klebharzes vorhanden sein. Als Klebharze können natürliche oder synthetische Harze, wie Kohlenwasserstoffharze, eingesetzt werden, die als Klebrigmacher wirken. Die Kohlenwasserstoffharze können phenolisch, aromatisch oder aliphatisch sein. Bevorzugt sind die Klebharze ausgewählt aus der Gruppe, bestehend aus Kolophoniumharzen und deren Estern, Terpen-Phenol-Harzen, Alkin-Phenol-Harzen, Phenol-Harzen und Cumaron-Inden-Harzen, wobei Phenol-Harze für die vorliegende Erfindung besonders gut geeignet sind.

Die erfindungsgemäße Kautschukmischung enthält weiterhin 3 bis 15 phr, bevorzugt 3 bis 10 phr, zumindest eines Weichmacheröls, wobei das Weichmacheröl bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle. Es ist vorteilhaft er Kautschukmischung für die Base eines Laufstreifens ein Weichmacheröl hinzuzufügen, da im fertigen Reifen Weichmacher generell entsprechend dem Konzentrationsgefälle migrieren und die Migration durch die genannte Maßnahme begrenzt werden kann. Es hat sich ein positiver Einfluss auf das Rollwiderstandsverhalten gezeigt, wenn das Weichmacheröl einen relativ niedrige Glasübergangstemperatur (T_{g}) hat. Daher ist die Verwendung von MES überaus bevorzugt, die von TDAE sehr bevorzugt und die von RAE bevorzugt.

Es können in der Kautschukmischung noch 0 bis 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis und / oder ein Pflanzenöl oder ein BTL-Öl (Biomass-To-Liquid) sein.

Erfindungswesentlich ist weiterhin, dass die Kautschukmischung 41 bis 50 phr zumindest eines Rußes enthält, wobei der Ruß eine Iodzahl gemäß ASTM D 1510 von 60 und 300 g / kg und eine DBP-Zahl gemäß ASTM D 2414 von 80 und 200cm3 /100g hat. Bevorzugt hat der Ruß eine Iodzahl gemäß ASTM D 1510 zwischen 80 und 130 g / kg und eine DBP-Zahl gemäß ASTM D 2414 zwischen 100 und 140 cm³ /100g.
Die Iodzahl gemäß ASTM D 1510 wird auch als Iodabsorptionszahl bezeichnet. Die DBP-Zahl gemäß ASTM D 2414 bestimmt das spezifische Absorptionsvolumen eines Rußes oder eines hellen Füllstoffes mittels Dibutylphthalat. Die Verwendung eines derartigen Rußes zeigt Vorteile hinsichtlich des Abriebverhaltens des gesamten Laufstreifens, da über den Rücklauf während des Reifenherstellprozesses geringe Mengen des Rußes der Base in die Kautschukmischung der Cap gelangen. Reifenversuche haben gezeigt, dass schon derart geringe Mengen (ca. 1 bis 3 phr) in der Cap dazu führen, dass sich bei Verwendung von Rußen mit anderen als den oben genannten Iod- und DBP-Zahlen der Abrieb deutlich verschlechtert.

Des Weiteren enthält die Kautschukmischung bevorzugt noch 0,1 bis 10 phr, besonders bevorzugt 0,2 bis 8 phr, ganz besonders bevorzugt 0,2 bis 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Weiterhin enthält die Kautschukmischung noch weitere Zusatzstoffe.
Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und weitere Aktivatoren.

Der Mengenanteil der Gesamtmenge an weiteren Zusatzstoffen beträgt 2 bis 50 phr, bevorzugt 4 bis 20 phr.

Die Vulkanisation der Kautschukmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung der Base des Laufstreifens eines Reifens und / oder einer Body-Mischung eines Reifens und zur Herstellung von Riemen, Gurten und Schläuchen zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung. Hierbei ist beispielsweise ebenso eine ausreichende Klebrigkeit relevant, damit sich ein guter Haftverbund zwischen den einzelnen Schichten oder zwischen der Kautschukmischung und den Festigkeitsträgern bilden kann.

Die Erfindung soll nun anhand von Vergleichs- und Ausführungsbeispielen, die in Tabellen 1 zusammengefasst sind, näher erläutert werden. Erfindungsgemäße Mischungen beginnen mit "E", während die Vergleichsmischungen mit "V" gekennzeichnet sind.
Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).
Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte hei Raumtemperatur (RT) gemäß DIN 53 505
- Rückprallelastizität bei Raumtemperatur (RT) und 70°C gemäß DIN 53 512
- Spannungswerte (Modul) bei 100 % und 200 % Dehnung bei Raumtemperatur (RT) gemäß DIN 53 504
- Zugfestigkeit bei Raumtemperatur (RT) gemäß DIN 53 504
- Weiterreißwiderstand nach Graves bei Raumtemperatur (RT) gemäß DIN 53 515
- Reißenergie bei Raumtemperatur (RT) gemäß DIN 53 448
- Reißdehnung bei Raumtemperatur (RT) gemäß DIN 53 504
- dynamischer Speichermodul E' bei 55 °C gemäß DIN 53 513 bei 8% Dehnung
- Durchgangswiderstand gemäß Norm DIN IEC 93

**Tabelle 1**

| **Bestandteil** | **Einheit** | **V1** | **V2** | **V3** | **V4** | **V5** | **E1** | **E2** | **E3** |
|---|---|---|---|---|---|---|---|---|---|
| Polyisopren^{a} | phr | 100 | 100 | 80 | 100 | 100 | 100 | 100 | 100 |
| BR^{b} | phr | -- | -- | 20 | -- | -- | -- | -- | -- |
| Kieselsäure^{c} | phr | 4 | -- | -- | -- | -- | 4 | 4 | 4,5 |
| Silan^{d} | phr | 0,5 | -- | -- | -- | -- | 0,5 | - | 0.5 |
| Ruß, N339 | phr | 38 | 41 | 41 | 41 | 59 | 41 | 41 | 44 |
| Weichmacheröl^{e} | phr | 1 | 1 | 1 | 6 | 9 | 5 | 5 | 8 |
| Klebharz^{f} | phr | 2 | 2 | 2 | 2 | 2 | 2 | 2 | 2 |
| ZnO | phr | 3 | 3 | 3 | 3 | 3 | 3 | 3 | 3 |
| Weitere Zusatzstoffe^{g} | phr | 7,8 | 7,8 | 7,8 | 7,8 | 7,8 | 7,8 | 7,8 | 7,8 |
| Beschleuniger | phr | 2,4 | 2,4 | 2,4 | 2,4 | 3 | 2,4 | 2,4 | 2,6 |
| Schwefel | phr | 2,1 | 2,1 | 2,1 | 2,1 | 2,5 | 2,1 | 2,1 | 2,2 |
| | | | | | | | | | |

| **Eigenschaft** | **Einheit** | **V1** | **V2** | **V3** | **V4** | **V5** | **E1** | **E2** | **E3** |
|---|---|---|---|---|---|---|---|---|---|
| Härte RT | ShA | 59 | 60 | 61 | 59 | 65 | 60 | 59 | 61 |
| Rückprall RT | % | 59 | 58 | 16 | 59 | 46 | 58 | 55 | 58 |
| Rückprall 70°C | % | 72 | 71 | 72 | 74 | 61 | 73 | 68 | 73 |
| Modul 100% | MPa | 2,1 | 2,4 | 2,3 | 2,3 | 3,6 | 2,4 | 2,3 | 2,5 |
| Modul 200% | MPa | 6,4 | 7 | 6,8 | 7 | 11,2 | 7,4 | 6,7 | 7,5 |
| E' 55°C, 8% | MPa | 4,5 | 4,7 | 5 | 4,3 | 6,3 | 4,6 | 4,5 | 4,7 |
| Reißfestigkeit | MPa | 24 | 24 | 21 | 23 | 21 | 21 | 21 | 21 |
| Reißdehnung | % | 490 | 470 | 430 | 460 | 350 | 430 | 430 | 410 |
| Reißenergie | MJ/m³ | 3,2 | 3,1 | 3,1 | 2,6 | 2,9 | 3,1 | 3,1 | 3 |
| Weiterreißwiderstand | N/mm | 62 | 49 | 37 | 48 | 56 | 51 | 52 | 50 |
| Durchgangswiderstand | Ω*cm | 5E +08 | 2E +04 | 2E +04 | 3E +04 | 2E +03 | 3E +04 | 3E +04 | 1E +04 |

| | | | | | | | | | |
|---|---|---|---|---|---|---|---|---|---|
| ^{a}SMR 10 ^{b}High-cis Polybutadien, cis-Anteil ≥ 95 Gew. -% ^{c} VN3, Fa. Evonik ^{d} TESPD ^{e} MES ^{f} Phenolharz, Koresin^{®}, Fa. BASF ^{g} Alterungsschutzmittel, Ozonschutzwachs, Stearinsäure, CTP ^{J} Sulfenamidbeschleuniger, CBS | | | | | | | | | |

Untersuchungen haben ergeben, dass für die Kautschukmischung der Base eines Laufstreifens eines Fahrzeugluftreifens, der Wert des Rückpralls bei 70°C mit dem Rollwiderstandverhalten und die Härte bei RT mit dem Handling korreliert sind. Als Parameter für die strukturelle Haltbarkeit haben sich die Reißenergie und der Weiterreißwiderstand als physikalische Mischungsparameter zur Charakterisierung der Rissbeständigkeit bewährt.
Ziel der vorliegenden Erfindung ist die Optimierung von geringster Hysterese unter Beibehaltung der Rissbeständigkeit und der elektrischen Leitfähigkeit zu erreichen, bei ausreichend guter Klebrigkeit.
So ist beispielsweise aus Tabelle 1 zu erkennen, dass durch die Reduzierung des Füllstoffgehaltes die Hysterese gesenkt werden kann (Vergleich von Mischung V5 und den restlichen Mischungen). Zwischen 41 phr Ruß und 38 phr Ruß nimmt die elektrische Leitfähigkeit sehr überraschend sprunghaft um ca. vier Zehnerpotenzen ab (Mischung V1 und E1, E2). Über 50 phr Ruß nimmt allerdings überraschenderweise der Rückprall sehr stark ab (Mischung V5) und kann nicht mehr durch stärkere Vernetzung plus Weichmacheröl gegenkompensiert werden, ohne dass die Rissbeständigkeit signifikant schlechter wird. Weiterhin zeigt sich durch den Zusatz von vergleichsweise geringen Mengen an aktivierter Kieselsäure eine bessere Rissbeständigkeit. Werden die Mischungen V1 bis V4 und E1 bis E3, welche einen ähnlichen Wert für den Rückprall haben, betrachtet, so haben die Mischungen V1 und E1 bis E3 höhere Werte für die Reißenergie und den Weiterreißwiderstand, als die entsprechende Mischungen ohne Kieselsäure V2 bis V4. Das Weglassen des Aktivators in Form des Kupplungsagens resultiert in einem geringeren Wert für den Rückprall, ohne dass sich die anderen Eigenschaften verbessern (Mischungen E1 und E2). Weiterhin zeigt sich, dass es vorteilhaft ist Polyisopren in Mengen von über 95 phr zu verwenden. Die Rissbeständigkeit einer derartigen Mischung übertrifft diejenige deutlich, welche mehr als 5 phr eines weiteren Kautschuks enthält (Mischungen V2 und V3).
Anhand der Tabelle 1 ist daher zusehen, dass nur die erfindungsgemäßen Mischungen E1 bis E3 die in der vorliegenden Erfindung gestellt Aufgabe zufriedenstellen lösen können.

## Patentansprüche

1. Kautschukmischung, **gekennzeichnet durch** folgende Zusammensetzung:
- 95 bis 100 phr zumindest eines natürlichen oder synthetischen Polyisoprens und
- 41 bis 50 phr zumindest eines Rußes und
- 3 bis 15 phr zumindest eines Weichmacheröls und
- 3 bis 15 phr zumindest einer Kieselsäure und
- 1 bis 7 phr zumindest eines Klebharzes und
- weitere Zusatzstoffe,
wobei der Ruß eine Iod-Absorptionszahl gemäß ASTM D 1510 von 60 bis 300 g/kg und eine DPB-Zahl gemäß ASTM D 2414 von 80 bis 200 cm³/100 g hat.

2. Kautschukmischung nach Anspruch 1, **dadurch gekennzeichnet, dass** das sie 98 bis 100 phr eines natürlichen oder synthetischen Polyisoprens enthält.

3. Kautschukmischung nach Anspruch 1 oder 2, **dadurch gekennzeichnet, dass** die Kieselsäure durch ein Kupplungsagens aktiviert ist.

4. Kautschukmischung nach Anspruch 3, **dadurch gekennzeichnet, dass** das Kupplungsagens ein Silan ist.

5. Kautschukmischung Anspruch 4, **dadurch gekennzeichnet, dass** die Menge des Silans 0,1 bis 5 phr beträgt.

6. Kautschukmischung nach einem der Ansprüche 1 bis 5, **dadurch gekennzeichnet, dass** die Menge an Kieselsäure 3 bis 10 phr beträgt.

7. Kautschukmischung nach einem der Ansprüche 1 bis 6, **dadurch gekennzeichnet, dass** sie 3 bis 10 phr eines Weichmacheröls enthält.

8. Kautschukmischung nach einem der Ansprüche 1 bis 7, **dadurch gekennzeichnet, dass** das Weichmacheröl ein Mineralöl ist.

9. Kautschukmischung nach Anspruch 8, **dadurch gekennzeichnet, dass** das Mineralöl MES ist.

10. Kautschukmischung nach einem der Ansprüche 1 bis 9, **dadurch gekennzeichnet, dass** das Klebharz ein Phenolharz ist.

11. Verwendung einer Kautschukmischung nach einem der Ansprüche 1 bis 10 zur Herstellung eines Fahrzeugluftreifens.

12. Verwendung einer Kautschukmischung nach Anspruch 11 zur Herstellung eines Laufstreifens oder einer Body-Mischung eines Fahrzeugluftreifens.

13. Verwendung einer Kautschukmischung nach einem der Ansprüche 1 bis 10 zur Herstellung eines Gurtes, Riemens oder Schlauches.

## Claims

1. Rubber mixture, **characterized by** the following composition:
- from 95 to 100 phr of at least one natural or synthetic polyisoproprene
and
- from 41 to 50 phr of at least one carbon black
and
- from 3 to 15 phr of at least one plasticizer oil and
- from 3 to 15 phr of at least one silica and
- from 1 to 7 phr of at least one adhesive resin
and
- additional substances,
where the iodine absorption number of the carbon black in accordance with ASTM D1510 is from 60 to 300g/kg and its DBP number in accordance with ASTM D2414 is from 80 to 200 cm³/100g.

2. Rubber mixture according to Claim 1, **characterized in that** it comprises from 98 to 100 phr of a natural or synthetic polyisoprene.

3. Rubber mixture according to Claim 1 or 2, **characterized in that** the silica has been activated by a coupling agent.

4. Rubber mixture according to Claim 3, **characterized in that** the coupling agent is a silane.

5. Rubber mixture according to Claim 4, **characterized in that** the quantity of the silane is from 0.1 to 5 phr.

6. Rubber mixture according to any of Claims 1 to 5, **characterized in that** the quantity of silica is from 3 to 10 phr.

7. Rubber mixture according to any of Claims 1 to 6, **characterized in that** it comprises from 3 to 10 phr of a plasticizer oil.

8. Rubber mixture according to any of Claims 1 to 7, **characterized in that** the plasticizer oil is a mineral oil.

9. Rubber mixture according to Claim 8, **characterized in that** the mineral oil is MES.

10. Rubber mixture according to any of Claims 1 to 9, **characterized in that** the adhesive resin is a phenolic resin.

11. Use of a rubber mixture according to any of Claims 1 to 10 for the production of a pneumatic tyre.

12. Use of a rubber mixture according to Claim 11 for the production of a tread or of a body mixture of a pneumatic tyre.

13. Use of a rubber mixture according to any of Claims 1 to 10 for the production of a drive belt or other belt or a hose.

## Revendications

1. Mélange de caoutchouc, **caractérisé par** la composition suivants :
- 95 à 100 pce d'au moins un polyisoprène naturel ou synthétique et
- 41 à 50 pce d'au moins un noir de carbone et
- 3 à 15 pce d'au moins une huile plastifiante et
- 3 à 15 pce d'au moins une silice et
- 1 à 7 pce d'au moins une résine adhésive et
- des additifs supplémentaires,
le noir de carbone présentant un indice d'absorption d'iode selon ASTM D 1510 de 60 à 300 g/kg et un indice DBP selon ASTM D 2414 de 80 à 200 cm³/100 g.

2. Mélange de caoutchouc selon la revendication 1, **caractérisé en ce qu'**il contient 98 à 100 pce d'un polyisoprène naturel ou synthétique.

3. Mélange de caoutchouc selon la revendication 1 ou 2, **caractérisé en ce que** la silice est activée par un agent de couplage.

4. Mélange de caoutchouc selon la revendication 3, **caractérisé en ce que** l'agent de couplage est un silane.

5. Mélange de caoutchouc selon la revendication 4, **caractérisé en ce que** la quantité du silane est de 0,1 à 5 pce.

6. Mélange de caoutchouc selon l'une quelconque des revendications 1 à 5, **caractérisé en ce que** la quantité de silice est de 3 à 10 pce.

7. Mélange de caoutchouc selon l'une quelconque des revendications 1 à 6, **caractérisé en ce qu'**il contient 3 à 10 pce d'une huile plastifiante.

8. Mélange de caoutchouc selon l'une quelconque des revendications 1 à 7, **caractérisé en ce que** l'huile plastifiante est une huile minérale.

9. Mélange de caoutchouc selon la revendication 8, **caractérisé en ce que** l'huile minérale est un MES.

10. Mélange de caoutchouc selon l'une quelconque des revendications 1 à 9, **caractérisé en ce que** la résine adhésive est une résine de phénol.

11. Utilisation d'un mélange de caoutchouc selon l'une quelconque des revendications 1 à 10 pour la fabrication d'un pneu automobile.

12. Utilisation d'un mélange de caoutchouc selon la revendication 11 pour la fabrication d'une bande de roulement ou d'un mélange de corps d'un pneu automobile.

13. Utilisation d'un mélange de caoutchouc selon l'une quelconque des revendications 1 à 10 pour la fabrication d'une sangle, d'une courroie ou d'un tuyau.
